Europäisches Patentamt

European Patent Office

Office européen des brevets

(11) Numéro de publication: **0 478 085 A1**

## (12) DEMANDE DE BREVET EUROPEEN

(21) Numéro de dépôt: **91202475.9**

(22) Date de dépôt: **24.09.91**

(51) Int. Cl.5: **B65G  65/00**, **A21B 3/07**, **A21C 9/08**

(30) Priorité: **28.09.90 IT 8562190**

(43) Date de publication de la demande:
**01.04.92 Bulletin  92/14**

(84) Etats contractants désignés:
**AT BE CH DE DK ES FR GB GR IT LI LU NL SE**

(71) Demandeur: **COSTRUZIONI MECCHANICHE SOTTORIVA S.p.A.**
**Via Vittorio Veneto, 63**
**I-36035 Marano Vicentino (Vicenza)(IT)**

(72) Inventeur: **Sottoriva, Claudio**
**Via Gorizia, 1**
**Marano Vicentino (Vicenza)(IT)**

(74) Mandataire: **Bettello, Pietro, Dott. Ing. et al**
**Via Col d'Echele, 25**
**I-36100 Vicenza(IT)**

(54) **Dispositif pour le chargement de chariots à plateaux amovibles superposés.**

(57) L'invention a pour objet un dispositif propre à permettre le chargement en continu de chariots (1) à plateaux amovibles superposés, provenant par exemple d'une machine (19) pour la formation de pâtons de pains.

Grâce aux mouvements coordonnés des fourches (6 et 7), il est possible d'obtenir un cycle de travail qui commence avec l'engagement par un opérateur d'un chariot (1) seulement équipé de plateaux vides (3), et qui se termine avec l'extraction par l'opérateur d'un chariot contenant uniquement des plateaux garnis (4).

FIG. 1

EP 0 478 085 A1

La présente invention a pour objet un dispositif propre à permettre le chargement de chariots à plateaux amovibles superposés.

Dans le domaine de la panification, il est nécessaire de transporter d'un lieu à un autre du local les petits blocs de pâte, généralement appelés "pâtons", qui sont destinés à constituer à la fin de l'opération les pièces élémentaires de pain cuit.

Les phases typiques de transfert des blocs sus-indisués sont celles depuis la machine de moulage ou de formation des pâtons jusqu'au four de cuisson, et de ce four aux machines de conditionnement. Généralement, ces phases de transfert surviennent alors que les pâtons sont disposés sur des plateaux qui peuvent être facilement rangés à l'état superposé sur un chariot mobile. En fait, la plus grande partie du temps nécessaire à l'accomplissement de ce travail est utilisée pour engager les plateaux complètement garnis de pâtons sur les différents étages du chariot de transfert.

En l'état actuel de la technique, cette opération est encore effectuée manuellement et implique un emploi considérable de main-d'oeuvre ; il faut noter que si l'on veut effectuer l'opération sus-indiquée dans un laps de temps raisonnable, il est souvent nécessaire d'avoir simultanément recours à au moins deux opérateurs.

Le but de la présente invention est de réaliser un dispositif propre à remédier aux inconvénients sus-mentionnés et en conséquence apte à effectuer les opérations considérées de manière automatique et substantiellement continue, sans présenter par contre des complications du point de vue de la construction et du fonctionnement.

Ce but est atteint à l'aide du dispositif qui est défini à la revendication 1.

En fait le dispositif suivant l'invention comprend au moins une fourche, mais préférablement deux, dont chacune est disposée latéralement par rapport au chariot et est apte à soutenir et à soulever un plateau. Des moyens sont prévus pour permettre à chaque fourche des déplacements dans le sens vertical ainsi que dans le sens horizontal suivant la direction qui correspond à l'engagement ou à l'extraction des plateaux sur le chariot. L'une des fourches est propre à amener un plateau garni de produits dans le chariot, tandis que l'autre est apte à prélever un plateau vide sur ce chariot.

Il est en outre prévu un tapis horizontal pour le transfert des plateaux vides qui lui sont amenés par l'une des fourches, ainsi qu'un moyen pour le transfert de ces plateaux à un autre tapis transporteur horizontal qui les amène au-dessous du distributeur de produits, en procédant en succession au garnissage des plateaux qui sont alors propres à être prélevés également en succession à l'aide de l'une des fourches.

On conçoit que dans un tel dispositif, l'opérateur doit uniquement mettre en place entre les deux fourches un chariot muni de plateaux vides, après quoi l'opération de chargement du chariot intervient de manière automatique par suite des mouvements coordonnés des deux fourches. Une fois le chariot ainsi garni, l'opérateur se contente de prélever le chariot muni des plateaux garnis pour le remplacer par un chariot muni de plateaux vides.

Dans l'une de ses revendications secondaires, l'invention vise la conformation particulière des moyens qui assurent les déplacements des fourches dans le sens horizontal et dans le sens vertical.

Ces caractéristiques de l'invention ainsi que d'autres vont maintenant être décrites de manière détaillée en se référant à une forme particulière de réalisation donnée à titre d'exemple non limitatif, avec l'aide des dessins annexés dans lesquels :

- Les figs 1 et 2 montrent le dispositif suivant l'invention en vue latérale, respectivement en plan par dessus ;
- Les figs. 3 à 8 sont des vues de côté du dispositif suivant l'invention, chacune illustrant l'une des différentes phases successives de son mode opératoire.

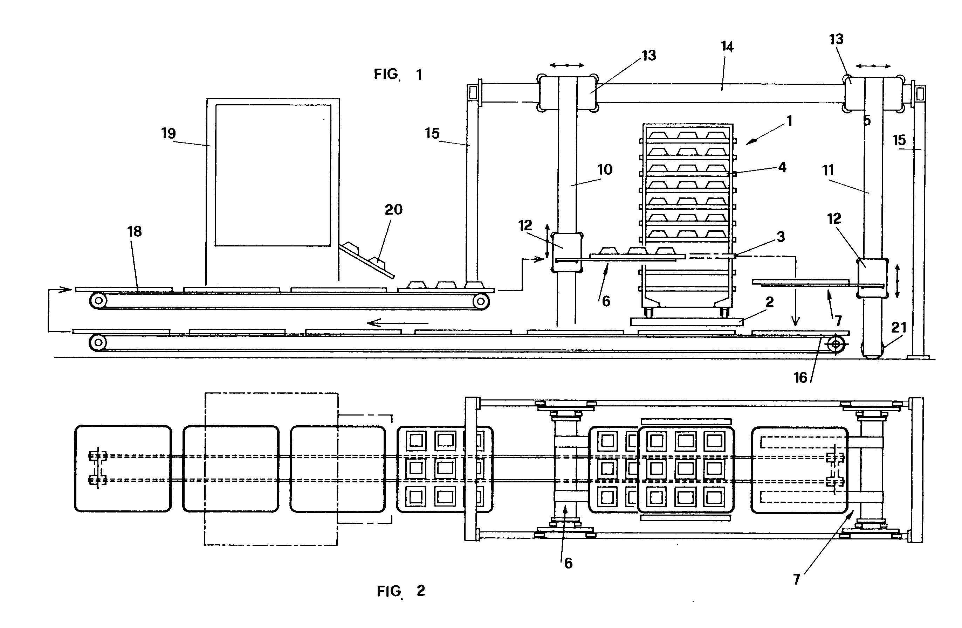

En fig. 1 et 2, on peut voir que le dispositif représenté est propre à prélever des objets, tels que des pâtons de pain 20, à leur sortie d'une machine de formation 19 pour les transférer à un chariot 1 qui comporte à l'origine une série de plateaux vides superposés 3 propres à être progressivement remplacés par une série de plateaux garnis 4.

Le déplacement des plateaux au niveau du chariot est obtenu au moyen de deux fourches 6 et 7 dont chacune est disposée sur un côté de ce chariot ; ces fourches sont pourvues de manchons de coulissement 12 qui se déplacent le long de barres verticales 10 et 11. Les extrémités supérieures de ces barres sont à leur tour fixées à des manchons de coulissement 13 qui sont susceptibles de se déplacer horizontalement le long de la traverse 14. Cette traverse est soutenue par deux piliers 15 prévus au niveau de ses extrémités. A la base des montants 10 et 11 sont prévus des organes de roulement 21 permettant leur déplacement sur un plan horizontal inférieur. De cette manière, les fourches 6 et 7 ont la possibilité de se déplacer ensemble le long de deux axes perpendiculaires en fonction des différentes exigences du travail.

Le chariot 1 prend appui sur une plate-forme horizontale 2 au-dessous de laquelle se déplace un tapis transporteur 16 propre à translater les plateaux vides sur toute sa longueur ; à son extrémité, des moyens, non représentés pour ne pas compliquer le dessin, sont en mesure de transférer les plateaux à un autre tapis transporteur 18 qui se déplace dans le sens inverse du précédent et qui passe notamment au-dessous de la machine de formation 19. En fait, les différents pâtons 20 sont destinés à tomber sur les plateaux disposés au-dessous en assurant de la sorte le garnissage de ceux-ci.

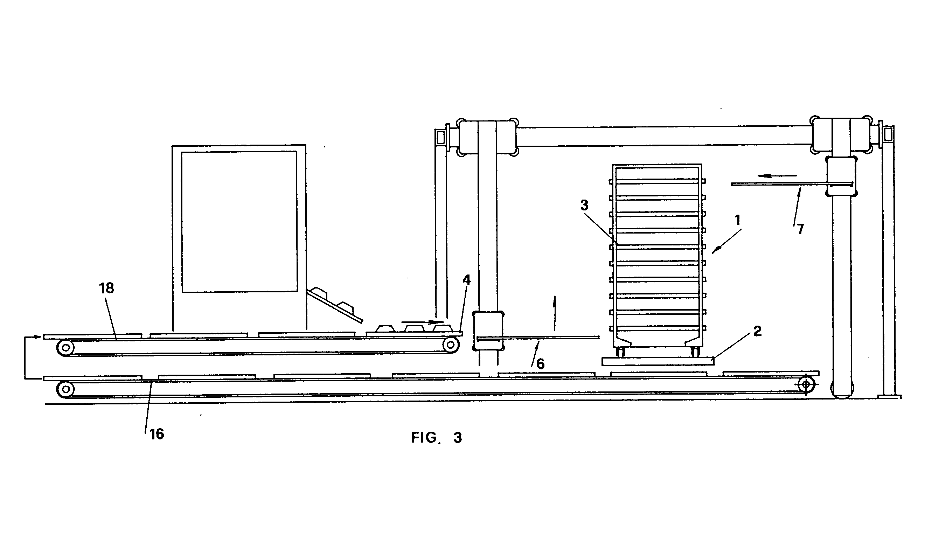

En fig. 3, on peut voir qu'à la position initiale de l'opération de transfert des pâtons, les plateaux 3 du chariot 1 sont tous vides.

Le chariot 1 est fixé sur la plate-forme 2 manuellement par l'opérateur. La fourche 6 est en position complètement abaissée, prête à recevoir un plateau garni 4, ceci également à l'aide de moyens non représentés, tandis que la fourche 7 se trouve en position complètement soulevée pour être prête à extraire le plateau 3 qui se trouve en position supérieure. En même temps les deux tapis 16 et 18 sont complètement remplis sur toute leur longueur en vue d'assurer la continuité de l'opération pour les motifs qui seront mieux compris ci-après.

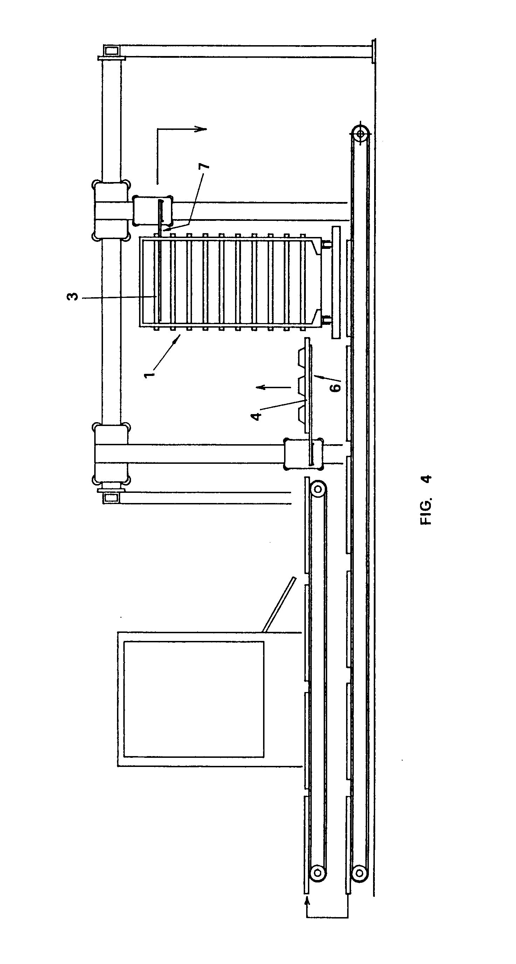

En fig. 4, est illustrée la phase opératoire au cours de laquelle la fourche 7 assure l'extraction hors du chariot 1 du plateau vide supérieur 3, pour être à même d'effectuer ensuite le mouvement indiqué par la flèche, c'est-à-dire un recul et un abaissement. En même temps, la fourche 6 opère l'élévation du plateau garni 4.

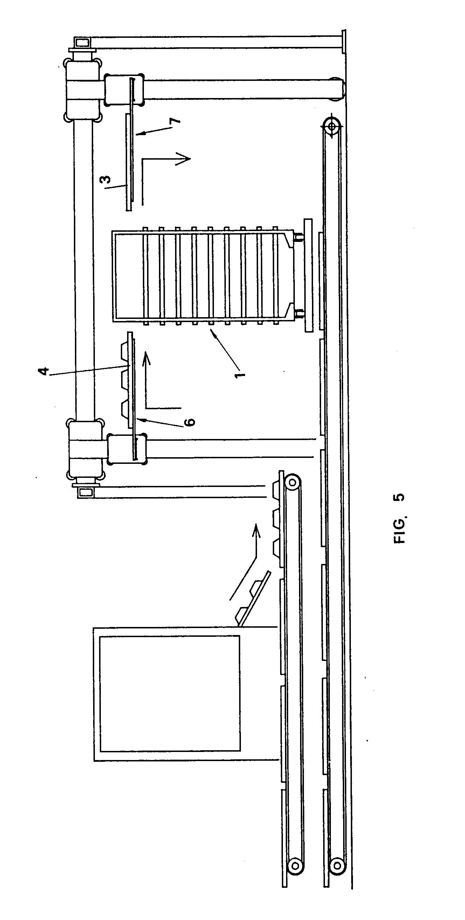

En fig. 5, on peut voir la phase opératoire au cours de laquelle le premier plateau 4 est arrivé à la position supérieure du chariot 2 et est prêt à être engagé dans celui-ci.

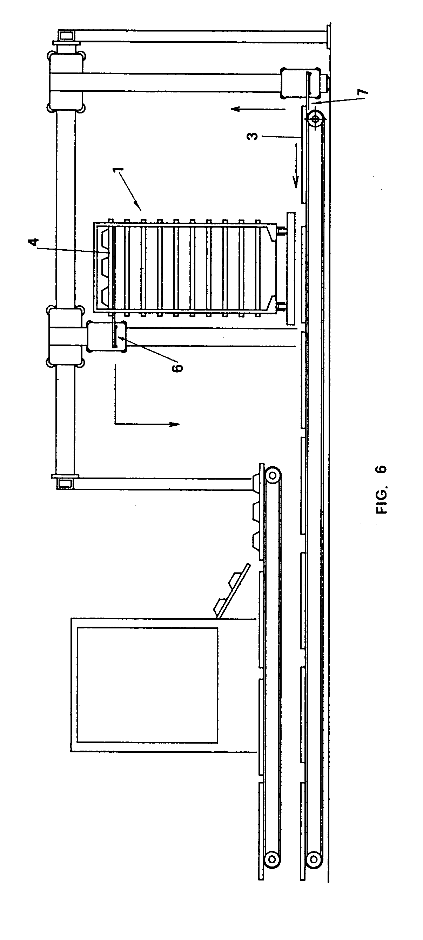

En fig. 6, on constate que la fourche 7 a été amenée au niveau du tapis inférieur 16 et a déposé sur celui-ci le plateau vide 3.

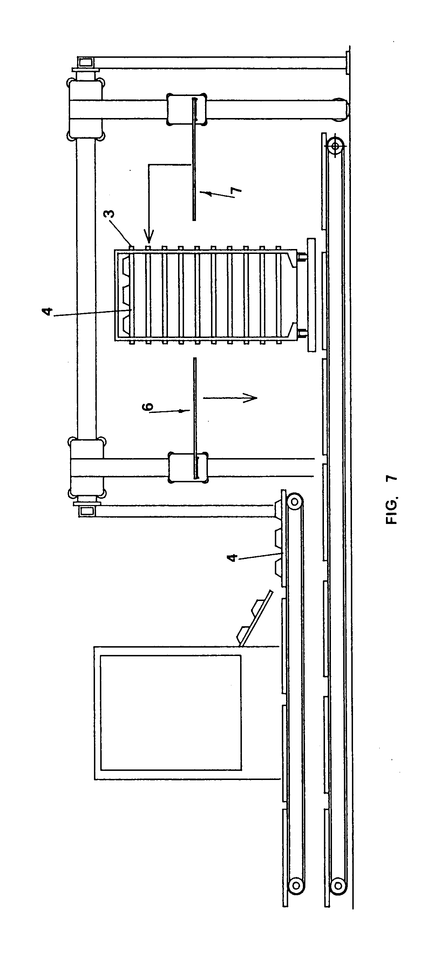

Fig. 7 montre la phase au cours de laquelle la fourche de droite 7 remonte pour se porter au niveau du plateau vide 3 placé immédiatement au-dessous de l'étage supérieur, tandis que la fourche 6 s'abaisse pour venir à une position propre à recevoir un autre plateau garni 4.

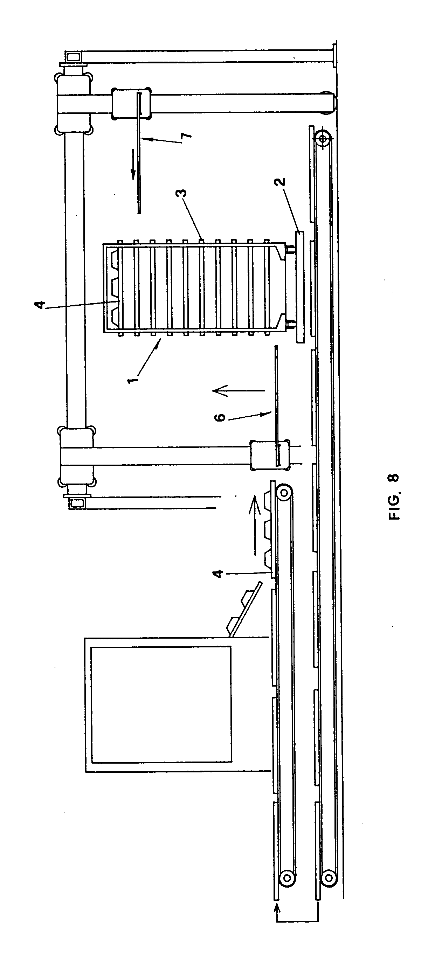

Fig. 8 fait ressortir qu'un cycle de travail a été complètement effectué et que le dispositif suivant l'invention se trouve revenu à une position identique à celle de la fig. 3.

Bien entendu, le chargement complet du chariot 1 s'effectue avec une série de cycles identiques à celui qui vient d'être décrit, le nombre de ces cycles étant égal à celui des étages qui sont prévus sur le chariot 1 pour la réception des plateaux.

De la description qui précède, on peut en conséquence constater que l'intégralité de l'opération est effectuée de manière automatique puisque l'unique intervention de l'opérateur réside dans la mise en place, sur la plateforme 2, d'un chariot avec une série de plateaux vides superposés, ainsi que dans l'éloignement de ce chariot chaque fois qu'il a été rempli de plateaux garnis, en réussissant ainsi sans autre moyen à réaliser les buts qui avaient été fixés.

Il doit être entendu que le dispositif suivant l'invention peut comporter un nombre quelconque de fourches de manière à assurer les fonctions dévolues aux fourches 6 et 7 ; en particulier le dispositif pourra ne comporter qu'une seule fourche.

## Revendications

1. Dispositif pour le chargement de chariots à plateaux amovibles superposés, caractérisé en ce qu'il comprend en combinaison au moins une fourche (6, 7) apte à soutenir et à soulever un plateau (3) par le côté de celui-ci, des moyens pour permettre à ladite fourche de se déplacer dans le sens vertical ainsi que dans le sens horizontal suivant une direction correspondant à celle de l'engagement ou du retrait des plateaux du chariot, cette fourche (6, 7) ayant pour fonction d'amener un plateau (4) à l'état garni de produits dans le chariot, ainsi que de prélever un plateau vide de celui-ci, un tapis horizontal (16) pour le transfert des plateaux vides qui lui sont amenés par la fourche, ainsi que des moyens pour le transfert de ces plateaux à un autre tapis horizontal (18) qui fait passer ces plateaux au-dessous du distributeur de produits pour assurer leur remplissage en succession et pour les rendre ainsi aptes à être prélevés, également en succession, à l'aide d'une fourche.

2. Dispositif suivant la revendication 1, caractérisé en ce qu'il comprend deux fourches qui opèrent au niveau des côtés opposés des chariots (1), l'une d'elles étant destinée à amener un plateau (4) garni de produits dans le chariot, tandis que l'autre est propre à prélever sur ce chariot un plateau vide (3).

3. Dispositif suivant la revendication 2, caractérisé en ce que chaque fourche (6, 7) est pourvue d'un manchon de coulissement (12) mobile le long de barres verticales (10, 11) prévues latéralement par rapport au chariot, l'extrémité supérieure de ces barres étant équipée d'autres manchons de coulissement (13) montés sur une traverse horizontale (14) dont les extrémités sont soutenues par deux piliers (15).

FIG. 1

FIG. 2

EP 0 478 085 A1

FIG. 3

FIG. 4

FIG. 5

EP 0 478 085 A1

FIG. 6

FIG. 7

FIG. 8

**Office européen des brevets**

# RAPPORT DE RECHERCHE EUROPEENNE

Numéro de la demande

## EP 91 20 2475

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 167 031 (WERNER & PFLEIDERER) <br> * le document en entier * <br> – – – | 1,3 | B 65 G 65/00 <br> A 21 B 3/07 <br> A 21 C 9/08 |
| A | FR-A-2 539 003 (LOUIS PAVAILLER ET AL.) <br> * le document en entier * <br> – – – | 1 | |
| A | DE-U-8 332 171 (HANS LINGL) <br> * page 5, lignes 1 - 30; figures 1, 2 * <br> – – – | 1 | |
| A | FR-A-2 483 376 (STIERLEN-MAQUET) <br> * page 1, ligne 1 - page 2, ligne 7; figures 1, 2 * <br> – – – | 1 | |
| A | DE-C-1 014 905 (HANS LINGL) <br> * colonne 1, ligne 26 - colonne 2, ligne 27; figures 1, 2 * <br> – – – – – | 1-3 | |

**DOMAINES TECHNIQUES RECHERCHES (Int. Cl.5)**

A 21 B
A 21 C
B 65 G

Le présent rapport de recherche a été établi pour toutes les revendications

| Lieu de la recherche | Date d'achèvement de la recherche | Examinateur |
|---|---|---|
| Berlin | 07 janvier 92 | SIMON J J P |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
-------------------------------------------------------------------
& : membre de la même famille, document correspondant